# FASCICULE DE BREVET EUROPEEN

(11) **EP 1 398 472 B1**
(45) Date de publication et mention de la délivrance du brevet: **07.06.2006**
(21) Numéro de dépôt: 03291684.3
(22) Date de dépôt: 07.07.2003
(51) Int. Cl.: F02C 7/045, F02K 1/82

(54) **Piece tubulaire d'atténuation acoustique pour entrée d'air de réacteur d'aéronef**
Rohrförmiges akustisches Dämpfungselement für den Lufteinlass eines Flugzeugmotors
Tubular acoustic attenuation piece for the air inlet of an aircraft engine

(30) Priorité: 10.09.2002 FR 0211183
(43) Date de publication de la demande: 17.03.2004
(73) Titulaire: AIRBUS France, 31060 Toulouse (FR)
(72) Inventeur: Porte, Alain, 31770 Colomiers (FR)
(74) Mandataire: Bonnetat, Christian

(56) Documents cités:
- EP-A- 0 572 725
- EP-A- 1 167 185
- FR-A- 2 378 176
- FR-A- 2 767 560
- GB-A- 736 267
- US-A- 4 235 303
- US-A- 4 258 823
- US-A- 5 581 054
- US-A- 5 603 471

## Description

La présente invention concerne une pièce tubulaire d'atténuation acoustique pour entrée d'air de réacteur d'aéronef.

On sait que les réacteurs équipant les aéronefs sont des sources de bruit d'un niveau très élevé (souvent supérieur à 130 décibels). Cela est particulièrement gênant si un réacteur est localisé à proximité d'une zone d'habitations, par exemple lors du décollage ou de l'atterrissage d'un aéronef. Les normes environnementales, qui sont de plus en plus restrictives, imposent de limiter le niveau de bruit issu d'un réacteur en dessous d'un seuil réglementaire afin de limiter les nuisances sonores perçues par les habitants de ladite zone. Ce seuil réglementaire est parfois encore réduit pendant la nuit, de telle façon que les aéronefs les plus bruyants ne peuvent alors ni atterrir, ni décoller, ce qui constitue une contrainte, voire un manque à gagner, pour les compagnies aériennes exploitant de tels aéronefs. Par conséquent, il est souhaitable de réduire le niveau de l'émission sonore d'un tel réacteur en dessous dudit seuil réglementaire réduit afin de pouvoir l'exploiter à toute heure du jour ou de la nuit.

De façon connue, le niveau du bruit émis par un réacteur d'aéronef peut être réduit en disposant, sur la surface intérieure de l'entrée d'air dudit réacteur, une pièce tubulaire à structure sandwich avec âme alvéolaire dont la face orientée vers l'intérieur de ladite entrée d'air est formée par un matériau perméable permettant le passage de l'air entre ladite entrée d'air et les alvéoles de ladite structure sandwich à âme alvéolaire, de telle façon que ces alvéoles puissent piéger une partie des ondes sonores et ainsi réduire le niveau de bruit émis par le réacteur vers l'extérieur. Toutefois, pour des facilités de construction et de montage, cette pièce à structure sandwich avec âme alvéolaire est le plus souvent réalisée en plusieurs coques, dont chacune d'elles forme une partie longitudinale de ladite pièce tubulaire et qui sont assemblées au moyen d'éclisses longitudinales réunissant les bords latéraux en regard de coques adjacentes.

De telles éclisses comportent généralement une bande longitudinale d'éclissage disposée du côté externe de ladite pièce tubulaire et une bande longitudinale d'éclissage disposée du côté interne de cette dernière. Les bandes longitudinales d'éclissage internes constituent des zones de la surface intérieure de l'entrée d'air dans lesquelles, d'une part, le bruit n'est pas absorbé et, d'autre part, les ondes sonores sont réfléchies, ce qui a pour effet de dégrader fortement, en terme de réduction du niveau de bruit, les performances de ladite pièce par rapport à une pièce monolithique.

Par ailleurs, comme on peut le voir par exemple sur les documents antérieurs US-4 840 093, US-4 969 535, US-5 014 815, US-5 025 888 et EP-1 167 185, les bords latéraux des coques adjacentes à solidariser sont aménagés de façon particulière, par exemple en les amincissant de façon continue ou en gradins, ou en y intercalant une âme alvéolaire densifiée, etc ... Dans tous les cas, ces aménagements sont longs, délicats et coûteux.

Partant du principe que les tentatives faites jusqu'à maintenant pour obtenir une isolation acoustique aussi peu dégradée que possible au niveau des raccords longitudinaux entre lesdites coques adjacentes sont relativement vaines et qu'elles entraînent des coûts élevés, la présente invention a pour objet une pièce tubulaire d'atténuation acoustique multicoque simple, aisée à fabriquer, qui, par ailleurs, non seulement n'entraîne pas une dégradation acoustique plus importante que celle engendrée dans les pièces multicoques connues, mais encore est tout à fait comparable, en ce qui concerne les performances acoustiques, aux pièces monolithiques. L'invention réalise cet objet avec une pièce tubulaire d'atténuation acoustique selon la revendication 1.

Selon l'invention, la pièce tubulaire d'atténuation acoustique pour entrée d'air de réacteur, comporte :
- au moins deux coques, dont chacune d'elles forme une partie longitudinale de ladite pièce tubulaire et qui sont raccordées le long de leurs bords longitudinaux pour former ladite pièce, la paroi de chacune desdites coques étant constituée d'une peau interne perméable, d'une peau externe imperméable et d'une âme alvéolaire interposée entre lesdites peaux interne et externe ; et
- pour chaque raccord entre deux bords longitudinaux de deux coques adjacentes, une bande longitudinale d'éclissage externe disposée du côté des peaux externes desdites coques adjacentes, à cheval sur ledit raccord, et solidarisée desdites peaux externes,
est remarquable en ce que :
- lesdites bandes d'éclissage externes assurent à elles seules la solidarisation desdites coques entre elles et sont fixées à ces dernières par des moyens de fixation n'apparaissant pas du côté desdites peaux internes ;
- chacun desdits bords longitudinaux de raccord est constitué par un chant de ladite coque correspondante, chant le long duquel l'âme alvéolaire de cette dernière comporte une zone marginale de même épaisseur que le reste de ladite âme alvéolaire, mais pouvant être endommagée, de sorte que ladite coque présente, en correspondance avec ladite zone marginale, une atténuation acoustique moins bonne que dans le reste de ladite coque ;
- deux bords longitudinaux en regard de deux coques adjacentes ménagent entre eux une fente ; et
- la somme de la largeur de ladite fente et des largeurs des deux zones marginales en regard est au plus égale à 15 mm.

La présente invention est basée sur une constatation expérimentale de la demanderesse qui a trouvé que, à la condition qu'il n'y ait aucune saillie (éclisse, moyens de fixation, ...) sur la peau interne desdites coques et que soit respectée une limite supérieure (15 mm) pour ladite somme des largeurs, il était possible d'obtenir, quel que soit le réacteur concerné, une bonne atténuation acoustique avec des bords longitudinaux de raccord, qui sont assemblés avec jeu (la fente) et le long desquels ladite âme alvéolaire est simplement coupée (ce qui ouvre des alvéoles de ladite âme et crée lesdites zones marginales endommagées à capacité d'atténuation abaissée).

Ainsi, les bords longitudinaux de raccord de la pièce tubulaire d'atténuation acoustique conforme à la présente invention ne nécessitent aucune préparation longue, délicate et coûteuse comme, par exemple, un amincissement progressif ou en gradins ou un remplacement partiel de l'âme alvéolaire par une âme alvéolaire plus dense. Les coûts de fabrication de la pièce tubulaire selon l'invention sont donc réduits à un minimum.

Du côté interne de ladite pièce tubulaire selon la présente invention, les bandes d'éclissage internes peuvent être éliminées et seules apparaissent donc lesdites fentes, dont la faible largeur peut correspondre tout juste à un jeu de montage et de fonctionnement.

Lesdits moyens de fixation desdites bandes d'éclissage externes peuvent être des boulons aveugles traversant uniquement ladite peau externe et partiellement logés dans ladite âme alvéolaire. En variante, ils peuvent être constitués par de la colle.

Afin de réduire encore plus l'effet de la présence desdites fentes de faible largeur du côté interne de la pièce tubulaire selon l'invention, il est avantageux d'obturer celles-ci, au moins du côté interne, par un joint souple, par exemple en mastic polysulfure.

De préférence, afin d'éviter le délaminage des chants desdites coques, on recouvre lesdits bords longitudinaux de raccord (les chants) par un prolongement replié d'au moins l'une desdites peaux interne et externe.

Puisque, pour pouvoir supprimer les bandes d'éclissage internes et leurs inconvénients acoustiques, il est nécessaire que lesdites bandes d'éclissage externes assurent à elles seules la solidarisation desdites coques, lesdites bandes d'éclissage externes doivent permettre la réalisation de raccords dont la solidité et la rigidité soient telles que les efforts appliqués à ladite pièce tubulaire n'entraînent pas de déformations, au niveau des raccords, sensiblement supérieures à celles qui apparaîtraient dans le cas où ladite pièce tubulaire serait monolithique.

A cet effet, lesdites bandes d'éclissage externes, qui sont par exemple métalliques, peuvent porter, sur leur face externe opposée auxdites peaux externes, des moyens de raidissement, tels que des raidisseurs individuels transversaux ou des bandes longitudinales de raidissement recouvrant au moins partiellement lesdites bandes d'éclissage externes. De telles bandes de raidissement peuvent comporter au moins une âme alvéolaire de façon à constituer une structure composite sandwich, apte éventuellement à atténuer les ondes sonores passant à travers lesdites fentes de raccord.

Il est avantageux que lesdites peaux externes soient plus épaisses que lesdites peaux internes pour transmettre les efforts importants auxquels est soumise ladite pièce tubulaire. De plus, les parties des peaux externes desdites coques, sur lesquelles sont fixées lesdites bandes d'éclissage longitudinales externes, peuvent être renforcées.

Les figures du dessin annexé feront bien comprendre comment l'invention peut être réalisée. Sur ces figures, des références identiques désignent des éléments semblables.

La figure 1 est une coupe transversale schématique d'un exemple de réalisation de la pièce tubulaire d'atténuation acoustique pour entrée d'air de réacteur, conforme à la présente invention.

La figure 2 illustre schématiquement, en coupe partielle à plus grande échelle, le raccord entre deux coques de la pièce tubulaire de la figure 1.

La figure 3 correspond à une vue agrandie du raccord de la figure 2.

Les figures 4 à 8 illustrent schématiquement des variantes de réalisation du raccord de la figure 2, les figures 4, 5, 7 et 8 étant des coupes semblables à cette dernière figure, alors que la figure 6 est une vue en perspective coupée.

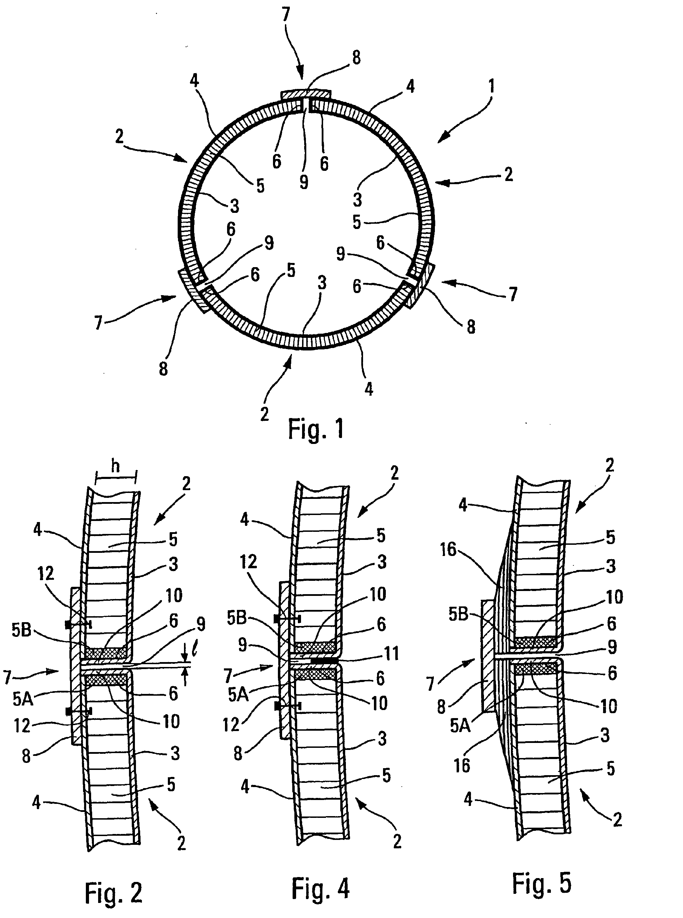

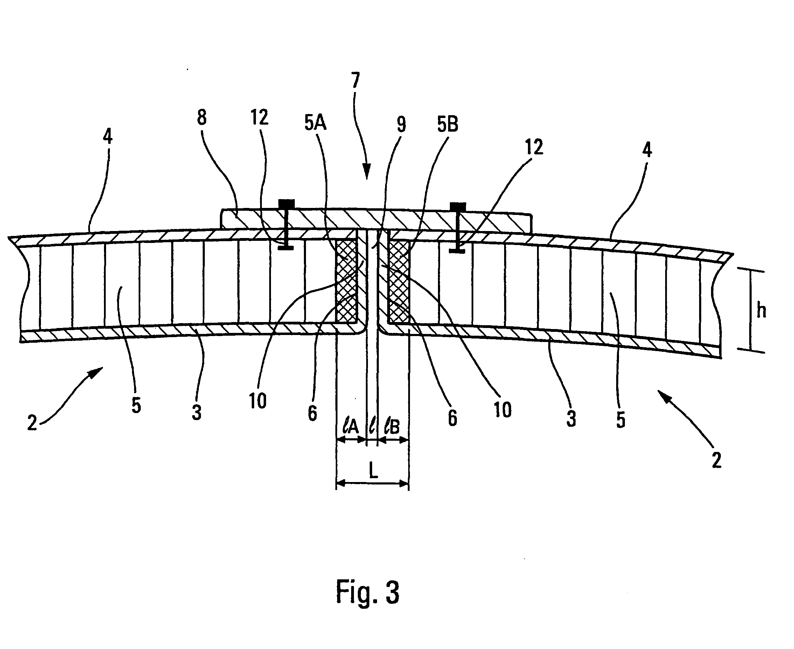

La pièce tubulaire d'atténuation acoustique 1 pour entrée d'air de réacteur (non représenté), représentée en coupe transversale schématique sur la figure 1 à titre d'exemple et conforme à la présente invention, est constituée de trois coques identiques 2 dont chacune forme, longitudinalement, un tiers de ladite pièce 1.

La paroi de chacune desdites coques 2 est constituée par une structure d'atténuation acoustique connue comportant une peau interne perméable 3, une peau externe imperméable 4, de préférence plus épaisse que la peau interne 3, et une âme alvéolaire 5 interposée entre lesdites peaux interne et externe 3 et 4.

Le long de leurs bords longitudinaux 6 en regard, lesdits coques 2 sont deux à deux solidarisées les unes des autres par trois raccords 7 disposés à 120° les uns des autres, à la périphérie de la pièce tubulaire 1.

Chaque raccord 7 comporte une bande longitudinale d'éclissage externe 8, s'étendant sur la longueur de la pièce 1 et disposée du côté des peaux externes 4 des coques 2 adjacentes. Chaque bande d'éclissage 8 est disposée à cheval sur les bords longitudinaux 6 en regard et est solidarisée des peaux externes 4 des deux coques 2 adjacentes concernées.

Chaque bord longitudinal 6 d'une coque 2 est simplement constitué par un chant --non spécialement aménagé-- de ladite coque où l'âme alvéolaire présente la même épaisseur h et les mêmes alvéoles que le reste de l'âme alvéolaire 5 de la paroi 3, 4, 5. Cependant, le long de chaque bord longitudinal 6, ladite âme alvéolaire comporte une zone marginale 5A, 5B (voir les figures 2 et 3), dans laquelle les alvéoles sont endommagés comme conséquence du processus de fabrication des coques 2. Il en résulte que ces dernières présentent, en correspondance avec lesdites zone marginales 5A, 5B, une atténuation acoustique amoindrie.

Par ailleurs, les deux bords longitudinaux 6 en regard de deux coques 2 adjacentes ménagent entre eux une fente 9 de largeur ℓ.

Le seul aménagement éventuel des chants 6 est leur revêtement par un prolongement replié 10 de l'une ou l'autre des peaux 3 ou 4, de préférence un prolongement de la peau interne 3. Les revêtements 10 présentent l'avantage d'éviter le délaminage des chants 6.

La demanderesse a trouvé que, quel que soit le réacteur dans l'entrée d'air duquel est disposée la pièce tubulaire 1, les performances d'atténuation acoustique de cette dernière sont pratiquement identiques à celles d'une pièce monolithique qui ne comporterait pas de raccord 7, à la condition que la somme L de la largeur ℓ de la fente 9 et des largeurs ℓA et ℓB des zones marginales 5A et 5B en regard (voir la figure 3) soit au plus égale à 15 mm.

Comme cela est illustré par la figure 4, un joint 11 peut être disposé dans les fentes 9, du côté interne. Un tel joint peut être réalisé en PR (mastic polysulfure), matière fréquemment utilisée en aéronautique. Les joints 11 permettent non seulement d'augmenter les performances d'atténuation de bruit de la pièce 1 en améliorant l'écoulement de l'air à la surface interne des raccords 7, mais encore de participer à empêcher le délaminage des chants 6 des coques 2.

Bien entendu, chaque bande d'éclissage externe 8 est dimensionnée de façon à permettre la transmission des efforts se produisant dans le raccord 7 correspondant. Les bandes d'éclissage 8 peuvent être métalliques et fixées sur les coques 2 par une ou plusieurs couches de colle (non visible sur les figures) ou par des boulons aveugles 12, non traversants, traversant seulement les peaux externes 4 et partiellement logés dans les âmes alvéolaires 5. Ainsi, lesdits moyens de fixation --colle ou boulons aveugles-- n'apparaissent pas du côté interne des peaux 3 et ne peuvent perturber les propriétés d'atténuation acoustique de la pièce 1.

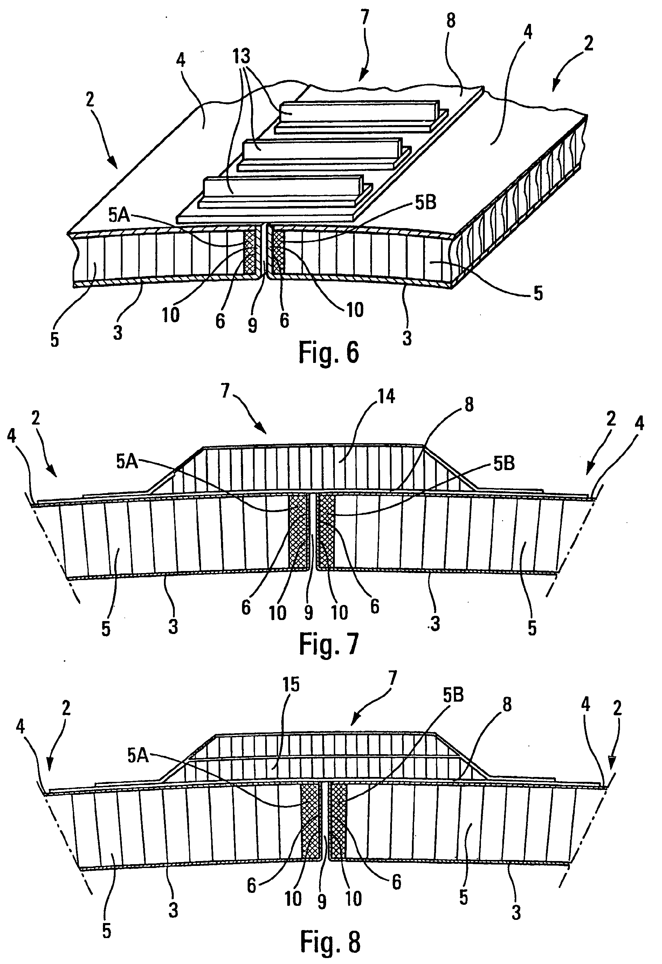

Notamment lorsque les bandes d'éclissage 8 sont constituées par des tôles minces, un ou plusieurs éléments raidisseurs transversaux 13, par exemple à section en I ou en T, sont fixés sur la face externe desdites bandes pour augmenter la rigidité des raccords 7 (voir la figure 6). En variante (voir les figures 7 et 8), lesdites bandes d'éclissage 8 peuvent être renforcées par des bandes longitudinales de raidissement 14 ou 15 recouvrant au moins partiellement lesdites bandes d'éclissage 8 et présentant elles-mêmes une structure sandwich à âme alvéolaire, semblable à celle des parois 3, 4, 5 des coques 2.

Dans la variante de réalisation de la figure 5, les parties des peaux externes 4 sur lesquelles sont fixées les bandes d'éclissage externes 8 sont renforcées. Dans le cas où lesdites peaux externes 4 sont réalisées en matière composite fibres-matrice, les renforcements 16 sont eux-mêmes constitués de ladite matière composite. Ainsi, on augmente non seulement la rigidité des coques 2 au voisinage des raccords 7, et donc la rigidité de ces derniers, mais encore la solidité desdits raccords 7.

## Revendications

1. Pièce tubulaire d'atténuation acoustique (1) pour entrée d'air de réacteur, comportant :
- au moins deux coques (2), dont chacune d'elles forme une partie longitudinale de ladite pièce tubulaire (1) et qui sont raccordées le long de leurs bords longitudinaux (6) pour former ladite pièce (1), la paroi de chacune desdites coques (2) étant constituée d'une peau interne perméable (3), d'une peau externe imperméable (4) et d'une âme alvéolaire (5) interposée entre lesdites peaux interne et externe ; et
- pour chaque raccord (7) entre deux bords longitudinaux (6) de deux coques (2) adjacentes, une bande longitudinale d'éclissage externe (8) disposée du côté des peaux externes (4) desdites coques adjacentes (2), à cheval sur ledit raccord (7), et solidarisée desdites peaux externes (4),
**caractérisée en ce que** :
- lesdites bandes d'éclissage externes (8) assurent à elles seules la solidarisation desdites coques (2) entre elles et sont fixées à ces dernières par des moyens de fixation n'apparaissant pas du côté desdites peaux internes (3) ;
- chacun desdits bords longitudinaux de raccord (6) est constitué par un chant de ladite coque (2) correspondante, chant le long duquel l'âme alvéolaire (5) de cette dernière comporte une zone marginale (5A, 5B) de même épaisseur (h) que le reste de ladite âme alvéolaire (5), mais pouvant être endommagée, de sorte que ladite coque (2) présente, en correspondance avec ladite zone marginale, une atténuation acoustique moins bonne que dans le reste de ladite coque (2) ;
- deux bords longitudinaux (6) en regard de deux coques (2) adjacentes ménagent entre eux une fente (9) ; et
- la somme (L) de la largeur (ℓ) de ladite fente (9) et des largeurs (ℓA et ℓB) des deux zones marginales en regard est au plus égale à 15 mm.

2. Pièce tubulaire (1) selon la revendication 1,
**caractérisée en ce que** lesdits moyens de fixation sont des boulons aveugles (12) traversant ladite peau externe (4) et partiellement logés dans ladite âme alvéolaire (5).

3. Pièce tubulaire (1) selon la revendication 1,
**caractérisée en ce que** lesdits moyens de fixation sont constitués par de la colle.

4. Pièce tubulaire (1) selon l'une des revendications 1 à 3,
**caractérisée en ce que**, au moins du côté interne, lesdites fentes (9) sont obturées par un joint (11).

5. Pièce tubulaire (1) selon la revendication 4,
**caractérisée en ce que** ledit joint (11) est réalisé en un mastic polysulfure.

6. Pièce tubulaire (1) selon l'une des revendications 1 à 5,
**caractérisée en ce que** lesdits bords longitudinaux de raccord (6) sont recouverts par un prolongement replié (10) d'au moins l'une desdites peaux internes et externes (3, 4).

7. Pièce tubulaire (1) selon l'une des revendications 1 à 6,
**caractérisée en ce que** lesdites peaux externes (4) sont plus épaisses que lesdites peaux internes (3).

8. Pièce tubulaire (1) selon l'une des revendications 1 à 7,
**caractérisée en ce que** les parties (16) des peaux externes (4) desdites coques (2), sur lesquelles sont fixées lesdites bandes d'éclissage longitudinales externes (8), sont renforcées.

9. Pièce tubulaire (1) selon l'une des revendications 1 à 8,
**caractérisée en ce que** lesdites bandes d'éclissage longitudinales externes (8) portent, sur leur face externe opposée auxdites peaux externes (4), des moyens de raidissement (13, 14, 15).

10. Pièce tubulaire (1) selon la revendication 9,
**caractérisée en ce que** lesdits moyens de raidissement sont constitués par des raidisseurs individuels (13) disposés transversalement sur lesdites bandes d'éclissage (8).

11. Pièce tubulaire (1) selon la revendication 9,
**caractérisée en ce que** lesdits moyens de raidissement sont constitués par des bandes longitudinales (14, 15) recouvrant au moins partiellement lesdites bandes d'éclissage (8).

12. Pièce tubulaire (1) selon la revendication 11,
**caractérisée en ce que** lesdites bandes longitudinales de raidissement (14, 15) comportent au moins une âme alvéolaire de façon à constituer une structure composite sandwich.

13. Pièce tubulaire (1) selon la revendication 12,
**caractérisée en ce que** lesdites bandes longitudinales de raidissement (14, 15) sont aptes à atténuer les ondes sonores passant à travers lesdites fentes de raccord (9).

## Claims

1. A tubular acoustic attenuation piece for a jet engine air intake, comprising:
- at least two shells, each of which forms a longitudinal part of said tubular piece and which are connected along their longitudinal edges to form said piece, the wall of each of said shells consisting of a permeable internal skin, of an impermeable external skin and of a cellular core inserted between said internal and external skins; and
- for each connection between two longitudinal edges of two adjacent shells, an external longitudinal fish plate strip arranged on the side of the external skins of said adjacent shells, straddling said connection, and secured to said external skins,
wherein:
- said external fish plate strips alone secure said shells together and are fixed to the latter by fixing means which are not visible on the side of said internal skins;
- each of said longitudinal connection edges consists of an edge face of said corresponding shell, along which edge face the cellular core of this shell has a marginal area of the same thickness as the rest of said cellular core but which can be damaged, so that said shell, corresponding with said marginal area, has acoustic attenuation which is not as good as in the remainder of said shell;
- two facing longitudinal edges of two adjacent shells leave a slot between them; and
- the sum of the width of said slot and of the widths of the two facing marginal areas is at most equal to 15 mm.

2. The tubular piece as claimed in claim 1,
wherein said fixing means are blind bolts passing through said external skin and partially housed in said cellular core.

3. The tubular piece as claimed in claim 1,
wherein said fixing means consist of adhesive.

4. The tubular piece as claimed in claim 1,
wherein, at least on the inside, said slots are filled with a seal.

5. The tubular piece as claimed in claim 4,
wherein said seal is made of polysulfide mastic.

6. The tubular piece as claimed in claim 1,
wherein said longitudinal connection edges are covered with a folded continuation of at least one of said internal and external skins.

7. The tubular piece as claimed in claim 1,
wherein said external skins are thicker than said internal skins.

8. The tubular piece as claimed in claim 1,
wherein the parts of the external skins of said shells to which said external longitudinal fish plate strips are fixed are reinforced.

9. The tubular piece as claimed in claim 1,
wherein said external longitudinal fish plate strips, on their opposite external face to said external skins, carry stiffening means.

10. The tubular piece as claimed in claim 9,
wherein said stiffening means consist of individual stiffeners arranged transversely on said fish plate strips.

11. The tubular piece as claimed in claim 9,
wherein said stiffening means consist of longitudinal strips at least partially covering said fish plate strips.

12. The tubular piece as claimed in claim 11,
wherein said longitudinal stiffening strips comprise at least one cellular core so as to form a sandwich composite structure.

13. The tubular piece as claimed in claim 12,
wherein said longitudinal stiffening strips are able to attenuate the sound waves passing through said connecting slots.

## Patentansprüche

1. Rohrförmiges akustisches Dämpfungselement (1) für den Lufteinlass eines Triebwerks, aufweisend:
- wenigstens zwei Schalen (2), die jeweils ein längsgerichtetes Teil des rohrförmigen Elements (1) bilden und entlang ihrer Längsränder (6) verbunden sind, um das Element (1) zu bilden, wobei die Wände der Schalen (2) jeweils aus einer durchlässigen Innenschicht (3), einer undurchlässigen Außenschicht (4) und einem zwischen der Innenschicht und der Außenschicht angeordneten Wabenkern (5) bestehen; und
- für jede Verbindung (7) zwischen zwei Längsrändern (6) von zwei benachbarten Schalen (2) ein äußeres längsgerichtetes Verbindungsband (8), das auf der Seite der Außenschichten (4) der benachbarten Schalen (2) angeordnet ist, beide Seiten der Verbindung (7) bedeckt und fest mit den Außenschichten (4) verbunden ist,
**dadurch gekennzeichnet, dass**:
- die äußeren Verbindungsbänder (8) alleinig die feste Verbindung der Schalen (2) miteinander sicherstellen und an diesen mit Befestigungsmitteln befestigt sind, die auf der Seite der Innenschichten (3) nicht zum Vorschein kommen;
- die längsgerichteten Verbindungsränder (6) jeweils aus einer Kante der entsprechenden Schale (2) bestehen, wobei der Wabenkem (5) der Schale (2) entlang dieser Kante einen Randbereich (5A, 5B) aufweist, der die gleiche Dicke (h) hat wie der Rest des Wabenkems (5), der jedoch beschädigt sein kann, so dass die Schale (2) dem Randbereich entsprechend eine schlechtere akustische Dämpfung aufweist als im Rest der Schale (2);
- zwei gegenüberliegende Längsränder (6) von zwei benachbarten Schalen (2) zwischen sich einen Schlitz (9) bilden; und
- die Summe (L) der Breite (I) des Schlitzes (9) und die Breiten (IA und IB) der beiden gegenüberliegenden Randbereiche höchstens 15 mm beträgt.

2. Rohrförmiges Element (1) nach Anspruch 1,
**dadurch gekennzeichnet, dass** die Befestigungsmittel Blindbolzen (12) sind, die die Außenschicht (4) durchdringen und teilweise in dem Wabenkern (5) sitzen.

3. Rohrförmiges Element (1) nach Anspruch 1,
**dadurch gekennzeichnet, dass** die Befestigungsmittel aus Klebstoff bestehen.

4. Rohrförmiges Element (1) nach einem der Ansprüche 1 bis 3,
**dadurch gekennzeichnet, dass** die Schlitze (9) wenigstens auf der Innenseite mit einer Dichtung (11) verschlossen sind.

5. Rohrförmiges Element (1) nach Anspruch 4,
**dadurch gekennzeichnet, dass** die Dichtung (11) aus einer Polysulfid-Dichtmasse hergestellt ist.

6. Rohrförmiges Element (1) nach einem der Ansprüche 1 bis 5,
**dadurch gekennzeichnet, dass** die längsgerichteten Verbindungsränder (6) von einer umgebogenen Verlängerung (10) von wenigstens einer der Innenschicht und Außenschicht (3, 4) bedeckt sind.

7. Rohrförmiges Element (1) nach einem der Ansprüche 1 bis 6,
**dadurch gekennzeichnet, dass** die Außenschichten (4) dicker sind als die Innenschichten (3).

8. Rohrförmiges Element (1) nach einem der Ansprüche 1 bis 7,
**dadurch gekennzeichnet, dass** die Teile (16) der Außenschichten (4) der Schalen (2), auf denen die äußeren längsgerichteten Verbindungsbänder (8) befestigt sind, verstärkt sind.

9. Rohrförmiges Element (1) nach einem der Ansprüche 1 bis 8,
**dadurch gekennzeichnet, dass** die äußeren längsgerichteten Verbindungsbänder (8) auf ihrer den Außenschichten (4) gegenüberliegenden Außenseite Versteifungsmittel (13, 14, 15) aufweisen.

10. Rohrförmiges Element (1) nach Anspruch 9,
**dadurch gekennzeichnet, dass** die Versteifungsmittel aus individuellen Versteifungen (13) bestehen, die in Querrichtung auf den Verbindungsbändern (8) angeordnet sind.

11. Rohrförmiges Element (1) nach Anspruch 9,
**dadurch gekennzeichnet, dass** die Versteifungsmittel aus Längsbändem (14, 15) bestehen, die die Verbindungsbänder (8) wenigstens teilweise bedecken.

12. Rohrförmiges Element (1) nach Anspruch 11,
**dadurch gekennzeichnet, dass** die längsgerichteten Versteifungsbänder (14, 15) wenigstens einen Wabenkern aufweisen, so dass sie eine Verbund-Sandwichstruktur bilden.

13. Rohrförmiges Element (1) nach Anspruch 12,
**dadurch gekennzeichnet, dass** die längsgerichteten Versteifungsbänder (14, 15) in der Lage sind, die Schallwellen zu dämpfen, die die Verbindungsschlitze (9) durchqueren.
